# FASCICULE DE BREVET EUROPEEN

(11) **EP 0 437 137 B1**
(45) Date de publication et mention de la délivrance du brevet: **11.05.1994**
(21) Numéro de dépôt: 90403713.2
(22) Date de dépôt: 20.12.1990
(51) Int. Cl.: F16F 13/00

(54) **Perfectionnements apportés aux manchons antivibratoires hydrauliques**
Hydraulisch gedämpfte Lagerbuchsen
Bush-type hydraulic vibration dampers

(30) Priorité: 09.01.1990 FR 9000163
(43) Date de publication de la demande: 17.07.1991
(73) Titulaire: HUTCHINSON, F-75384 Paris Cédex 08 (FR)
(72) Inventeur: Thelamon, Jean, F-28800 Bonneval (FR); Schwartz, Paul, F-28200 Chateaudun (FR)
(74) Mandataire: Behaghel, Pierre

(56) Documents cités:
- EP-A- 0 213 324
- EP-A- 0 248 714
- DE-A- 3 910 570
- FR-A- 2 624 235
- GB-A- 2 200 190
- US-A- 4 790 520

## Description

L'invention est relative aux manchons antivibratoires hydrauliques comprenant deux armatures rigides tubulaires s'entourant l'une l'autre et de préférence de révolution au moins en partie, coaxiales et concentriques au moins sous charge, armatures comprenant entre elles une monture en élastomère, monobloc ou non, conformée de façon à former avec celles-ci au moins deux poches étanches qui sont opposées diamétralement selon une direction D et communiquent entre elles par un canal étroit, l'ensemble desdites poches et dudit canal étant rempli d'un liquide amortisseur.

De tels manchons sont destinés à être montés entre deux pièces rigides solidarisables respectivement avec les deux armatures et susceptibles de subir l'une par rapport à l'autre des oscillations orientées selon la direction diamétrale D, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour une fréquence donnée des oscillations, fréquence dont la valeur F est directement liée aux cotes dudit canal, un phénomène de résonance propre à amortir la transmission de ces oscillations de l'une des armatures à l'autre.

Les pièces rigides en question sont par exemple, d'une part, un châssis de véhicule et, d'autre part, le moteur à combustion interne ou le train avant ou arrière de ce véhicule.

L'invention concerne parmi les manchons ci-dessus, ceux dans lesquels la portion de la monture en élastomère qui délimite l'une au moins des poches est constituée par un soufflet ou membrane flexible étanche s'étendant essentiellement selon la direction longitudinale des armatures rigides tubulaires et dont les bords sont rapportés de façon étanche sur l'armature tubulaire externe (voir le support illustré sur les figures 3 et 4 du document EP-0 248 714).

La poche en question, dite "poche de compensation", sert alors à recueillir avec une grande souplesse les volumes variables de liquide qui sont refoulés vers elle à travers le canal étroit à partir de l'autre poche, dite de "travail" et le soufflet en question ne participe alors pratiquement pas à la transmission des poids et autres efforts de l'une des pièces rigides à l'autre, ladite transmission étant prise en charge par une portion épaisse et résistante à la compression radiale constitutive de la monture en élastomère et délimitant la poche de travail.

Du fait de sa relative minceur, le soufflet considéré est relativement fragile et sa tenue en endurance lorsque le manchon est soumis à des sollicitations cycliques de grande amplitude peut être limitée, en particulier s'il est soumis à des efforts d'extension élevés.

Il en résulte une longévité réduite pour les manchons comprenant de tels soufflets.

L'invention a pour but, surtout, de remédier à cet inconvénient et à augmenter ainsi la longévité desdits manchons.

A cet effet, les manchons du genre en question selon l'invention sont essentiellement caractérisés en ce qu'ils comprennent, radialement distant du soufflet ci-dessus et définissant avec lui la poche de compensation, un second soufflet étanche s'étendant essentiellement selon la direction longitudinale des armatures rigides tubulaires et rapporté de façon étanche comme le premier sur l'armature tubulaire externe.

Dans des modes de réalisation préférés, on a recours en outre à l'une et/ou à l'autre des dispositions suivantes :
- le volume intérieur du second soufflet est mis à l'air libre à travers une ouverture évidée dans l'armature tubulaire externe,
- le soufflet délimitant extérieurement la poche de compensation présente la forme d'un bandeau s'étendant transversalement et bombé vers l'axe du manchon et il en est de même du second soufflet disposé à l'intérieur de ladite poche,
- la section transversale du bandeau constitutif du second soufflet présente la forme d'un U ou V, notamment à fond aplati, dont les deux branches et/ou le fond peuvent être eux-mêmes plissés.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

Les figures 1 et 2, de ce dessin, montrent un manchon antivibratoire hydraulique établi selon l'invention, respectivement en coupe axiale selon I-I figure 2 et en coupe transversale selon II-II figure 1.

La figure 3 est une coupe axiale partielle du même manchon selon III figure 2.

Le manchon en question comprend :
- une armature métallique tubulaire interne de révolution 1,
- une armature métallique tubulaire externe de révolution 2 qui entoure l'armature 1 et qui, pour l'état monté et chargé du manchon, peut être coaxiale à cette armature 1, les axes des deux armatures étant de toute façon parallèles entre eux au repos du manchon,
- et un corps en élastomère 3 reliant l'une à l'autre les deux armatures 1 et 2 en ménageant entre celles-ci deux poches étanches A,B diamètralement opposées selon une direction D.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter un support antivibratoire, éléments tels qu'un moteur ou bras de suspension de véhicule et que le châssis de ce véhicule.

Une partie du corps 3, qui est supposée ici à titre purement illustratif être sa moitié supérieure, présente sous charge une forme en partie de révolution autour de l'axe commun aux deux armatures 1 et 2 avec une demi-section axiale en forme de U ou de V, deux gorges 4 ouvertes axialement vers l'extérieur du manchon étant évidées dans les deux faces frontales 5 de ladite portion.

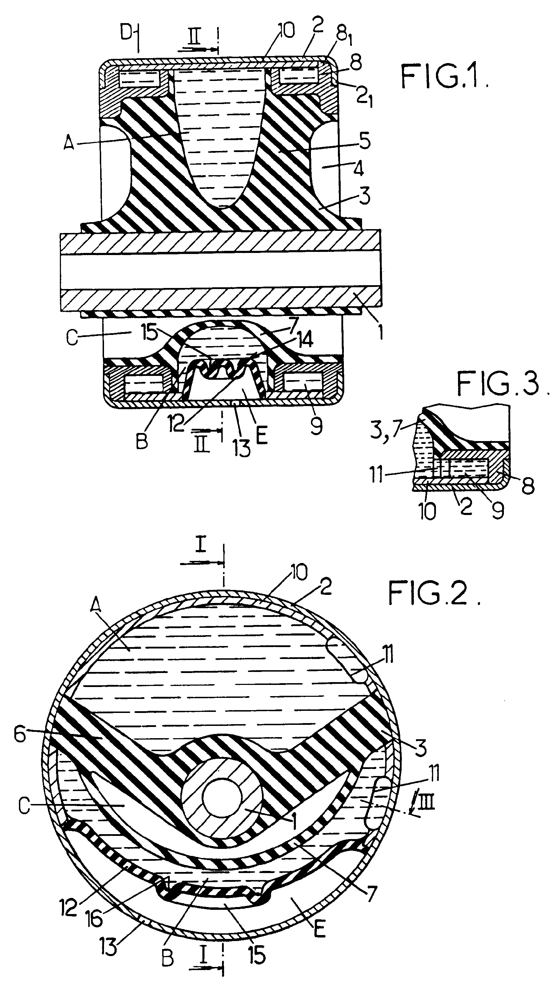

Cette portion comprend également deux bras radiaux 6 diamètralement opposés ou s'étendant selon un V largement ouvert ainsi que visible sur la figure 2, bras qui délimitent avec les faces 5 et l'armature externe 2 la chambre A.

La portion du corps 3 qui délimite la chambre B est constituée par un soufflet ou membrane flexible mince et étanche 7.

Ce soufflet se présente sous la forme d'un bandeau s'étendant selon un arc de cercle et transversalement bombé vers l'axe. Ce bandeau présente deux bords semi-circulaires reliés de façon étanche à l'armature externe 2 et les deux extrémités dudit bandeau considérées selon la direction circonférentielle sont raccordées aux bras radiaux 6, une poche C ouverte axialement à l'air libre étant ainsi ménagée entre ces bras et le soufflet 7.

Deux profilés circulaires 8 sont rapportés aux deux extrémités axiales de l'armature externe 2, à l'intérieur de cette armature, de façon à former avec cette dernière deux canaux circulaires étroits 9.

Dans le mode de réalisation illustré, chaque profilé 8 présente en demi-section axiale la forme d'un U ouvert radialement vers l'extérieur et comporte un disque 8₁ faisant légèrement saillie vers l'extérieur et serti entre un bord 2₁ rabattu vers l'intérieur d'une extrémité axiale de l'armature externe 2 et la tranche terminale en regard d'un fourreau cylindrique ajouré 10 formant entretoise et introduit jointivement dans cette armature.

Ce fourreau 10 enveloppe jointivement les portions, des deux profilés 8, comprises entre les bords des deux disques 8₁ de manière à fermer ces profilés de façon étanche radialement vers l'extérieur.

Ledit fourreau n'est pas continu sur toute son étendue circonférentielle, mais composé de deux morceaux incurvés ou tuiles entre lesquels sont disposées les extrémités des bras 6, comme visible sur la figure 2.

Comme visible également sur la figure 2, chacun des deux canaux 9 débouche latéralement par des orifices 11 dans respectivement les deux chambres A et B.

Lors du fonctionnement du manchon ci-dessus décrit, des oscillations sont appliquées selon la direction D sur l'une des deux armatures tubulaires 1 et 2 par rapport à l'autre, ce qui chasse alternativement un certain volume de liquide à travers le canal étroit 9 de l'une des poches A et B à l'autre et inversement.

Lorsque la fréquence de ces oscillations est égale à une valeur prédéterminée, la colonne de liquide soumise aux va-et-vient dans le canal 3 est le siège d'un phénomène de résonance, ce qui a pour effet d'amortir ou filtrer efficacement les oscillations considérées.

La paroi flexible mince constitutive du soufflet 7 est soumise à une extension permanente du fait de la précharge conduisant au centrage mutuel des deux armatures 1 et 2, laquelle précharge se traduit par un refoulement de liquide de la poche A dans la poche B.

Les oscillations ci-dessus se traduisent quant à elles par des variations du degré de ladite extension permanente, variations qui peuvent atteindre une grande amplitude lorsque apparaît la résonance évoquée ci-dessus.

Cette paroi 7 peut se fatiguer rapidement, ce qui réduit sa longévité.

Pour remédier à cet inconvénient, on prévoit ici à l'intérieur de la poche B, entre le soufflet 7 et la portion, de l'armature tubulaire externe 2, que ce soufflet recouvre intérieurement, un second soufflet ou membrane flexible mince et étanche 12 dont le bord est rapporté de façon étanche contre la face interne de ladite armature tubulaire externe 2, la chambre E comprise entre ce second soufflet 12 et cette armature étant mise à l'air libre à travers un trou 13 évidé dans ladite armature.

Le second soufflet 12 présente lui-même ici une forme analogue à celle du premier soufflet 7, c'est-à-dire celle d'un bandeau bombé en dos d'âne et dont la ligne moyenne ainsi que les deux bords longitudinaux s'étendent selon des arcs de cercles admettant pour axe l'axe de l'armature tubulaire externe.

La section droite de ce bandeau est choisie de façon à rendre possible son écrasement contre la face interne de l'armature tubulaire externe 2 sous l'effet de la pression du liquide contenu dans la poche B.

Cette section peut ainsi affecter celle d'un U renversé dont chaque pied serait rendu facilement plissable par une forme brisée, notamment en V ou en W.

Ou encore ladite section peut affecter la forme d'un V renversé présentant notamment un fond ou sommet 14 relativement "plat" ou plutôt cylindrique avec des génératrices parallèles à l'axe de l'armature 2, comme illustré sur la figure 1, ledit fond pouvant être creusé vers l'armature 2 : dans le mode de réalisation illustré, le fond 14 est creusé par deux gorges 15 s'étendant parallèlement à la ligne moyenne du bandeau, gorges qui peuvent se rejoindre, en formant alors une boucle fermée, par l'intermédiaire de deux gorges 16 s'étendant parallèlement à l'axe du manchon.

La raideur ou flexibilité du second soufflet 12 est choisie de façon telle, par rapport à celles du premier soufflet 7, que les mises en pression de la poche B par le liquide se traduisent initialement par un écrasement progressif dudit second soufflet 12, avec évacuation de l'air contenu dans la chambre E à travers le trou 13, la mise en extension du soufflet 7 n'intervenant qu'aux instants où la pression considérée dépasse une valeur de seuil relativement élevée.

En particulier, l'essentiel de la surpression permanente due à la précharge du manchon est absorbé par cette déformation du second soufflet.

Cette circonstance permet d'allonger considérablement la longévité du manchon, en particulier pour les raisons suivantes :
- la longévité d'une paroi en élastomère est beaucoup plus grande lorsqu'elle travaille en compression qu'en extension,
- les cotes, la forme et la composition du second soufflet peuvent être choisies très librement et en particulier beaucoup plus librement que celles du soufflet 7, lequel est venu de moulage avec le reste du corps en élastomère 3, ce qui implique notamment certaines servitudes pour rendre possible le démoulage.

Bien entendu, les réductions de la pression du liquide dans la poche B se traduisent automatiquement par un regonflement du second soufflet 12 lui rendant sa forme initiale, avec admission d'un nouveau volume d'air dans la chambre E.

En suite de quoi et quel que soit le mode de réalisation adopté, on dispose finalement d'un manchon antivibratoire hydraulique dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où le premier soufflet 7 en élastomère serait réalisé indépendamment de la portion, du corps 3, délimitant la chambre de travail A, ce premier soufflet pouvant être réalisé en un seul bloc avec le second soufflet 12, ou être associé à ce dernier par préassemblage avant leur montage commun dans l'armature 2,
- et celles où le volume intérieur du second soufflet 12 ne serait pas mis à l'air libre, ce qui peut être le cas lorsque le manchon est logé dans un palier continu.

## Revendications

1. Manchon antivibratoire hydraulique comprenant deux armatures rigides tubulaires (1,2) s'entourant l'une l'autre et comprenant entre elles une monture en élastomère (3), monobloc ou non, conformée de façon à former avec celles-ci au moins deux poches étanches (A,B) qui sont opposées diamétralement et communiquent entre elles par un canal étroit (9), l'ensemble desdites poches et dudit canal étant rempli d'un liquide amortisseur, la portion de la monture en élastomère qui délimite l'une au moins des poches (B) étant constituée par un soufflet ou membrane flexible étanche (7) s'étendant essentiellement selon la direction longitudinale des armatures rigides tubulaires (1, 2) et dont les bords sont rapportés de façon étanche sur l'armature tubulaire externe (2), caractérisé en ce qu'il comprend, radialement distant du soufflet ci-dessus et définissant avec lui ladite poche (B), un second soufflet étanche (12) s'étendant essentiellement selon la direction longitudinale des armatures rigides tubulaires (1, 2) et rapporté de façon étanche comme le premier sur l'armature tubulaire externe.

2. Manchon selon la revendication 1, caractérisé en ce que le volume intérieur (E) du second soufflet (12) est mis à l'air libre à travers une ouverture (13) évidée dans l'armature tubulaire externe (2).

3. Manchon selon l'une quelconque des revendications 1 et 2, caractérisé en ce que le premier soufflet (7) présente la forme d'un bandeau s'étendant transversalement et bombé vers l'axe du manchon et en ce qu'il en est de même du second soufflet (12).

4. Manchon selon l'un quelconque des précédentes revendications, caractérisé en ce que la section transversale du bandeau constitutif du second soufflet (12) présente la forme d'un U ou V dont les deux branches sont elles-mêmes plissées.

5. Manchon selon l'une quelconque des précédentes revendications, caractérisé en ce que la section transversale du bandeau constitutif du second soufflet (12) présente la forme d'un U ou V à fond aplati (14).

6. Manchon selon la revendication 5, caractérisé en ce que le fond aplati (14) est creusé en direction de l'armature tubulaire externe (2).

7. Manchon selon la revendication 6, caractérisé en ce que le fond aplati (14) est creusé par deux gorges (15) s'étendant parallèlement à la ligne moyenne du bandeau.

8. Manchon selon la revendication 7, caractérisé en ce que les deux gorges (15) sont réunies par deux gorges (16) s'étendant parallèlement à l'axe du manchon de façon à former ensemble une bouche fermée.

## Patentansprüche

1. Hydraulisch gedämpfte Lagerbuchse, die aus zwei starren, rohrförmigen Armaturen (1, 2) besteht, von denen die eine die andere umgibt und zwischen denen sich ein Einsatz (3) aus elastomerem Material befindet, der ein- oder mehrteilig sein kann und so gestaltet ist, daß er mit den rohrförmigen Armaturen wenigstens zwei dichte Taschen (A, B) bildet, die sich diametral gegenüberliegen und miteinander über einen engen Kanal (9) verbunden sind, wobei die aus den Taschen und dem Kanal bestehende Anordnung mit einer Dämpfungsflüssigkeit gefüllt ist und der Abschnitt des elastomeren Einsatzes, der wenigstens eine der Taschen (B) begrenzt, aus einem dichten, flexiblen Balg oder Membran (7) besteht, die sich im wesentlichen in Längsrichtung der starren, rohrförmigen Armaturen (1, 2) erstreckt und deren Ränder dicht an der äußeren rohrförmigen Armatur (2) angebracht sind, dadurch gekennzeichnet, daß die Lagerbuchse in radialem Abstand von dem erwähnten Balg und mit diesem die Tasche (B) bildend einen zweiten dichten Balg (12) enthält, der sich im wesentlichen in Längsrichtung der starren rohrförmigen Armaturen (1, 2) erstreckt und wie der erste Balg dicht an der äußeren rohrförmigen Armatur angebracht ist.

2. Lagerbuchse nach Anspruch 1, dadurch gekennzeichnet, daß der Innenraum (E) des zweiten Balges (12) über eine Öffnung (13), die in der äußeren rohrförmigen Armatur (2) vorgesehen ist, mit der Atmosphäre in Verbindung steht.

3. Lagerbuchse nach einem der vorhergehenden Ansprüche 1 und 2, dadurch gekennzeichnet, daß der erste Balg (7) die Form eines Bandes hat, das sich in Querrichtung erstreckt und gegenüber der Achse der Buchse ausgebeult ist, und daß dies auch bei dem zweiten Balg (12) der Fall ist.

4. Lagerbuchse nach einem der vorhergehenden Ansprüche, dadurch gekennzeichnet, daß der Querschnitt des Bandes, das den zweiten Balg (12) bildet, die Form eines U oder V hat, deren beide Schenkel selbst gefaltet sind.

5. Lagerbuchse nach einem der vorhergehenden Ansprüche, dadurch gekennzeichnet, daß der Querschnitt des Bandes, das den zweiten Balg (12) bildet, die Form eines U oder V mit abgeflachtem Boden (14) hat.

6. Lagerbuchse nach Anspruch 5, dadurch gekennzeichnet, daß der abgeflachte Boden (14) in Richtung der äußeren rohrförmigen Armatur (2) Vertiefungen enthält.

7. Lagerbuchse nach Anspruch 6, dadurch gekennzeichnet, daß der abgeflachte Boden (14) durch zwei Rinnen (15) vertieft ist, die sich parallel zur Mittellinie des Bandes erstrecken.

8. Lagerbuchse nach Anspruch 7, dadurch gekennzeichnet, daß die beiden Rinnen (15) über zwei weitere Rinnen (16) miteinander verbunden sind, die sich parallel zur Achse der Buchse erstrecken, und die Rinnen gemeinsam einen geschlossenen Ring bilden.

## Claims

1. Hydraulically damped bushing comprising two rigid tubular bodies (1, 2) surrounding each other and comprising therebetween an elastomeric member (3), which is possibly monobloc, and so shaped as to form with the latter at least two tight cavities (A, B) which are diametrically located and communicate with each other through a narrow channel (9), the assembly comprising said cavities and said channel being filled with a damping liquid, the portion of the elastomeric member which defines at least one of the cavities (B) consisting of a tight flexible diaphragm or bellows (7) which substantially extends along the longitudinal direction of the rigid tubular bodies (1, 2) and whose edges are sealingly attached on the external tubular body (2), characterized in that it comprises, radially distant from the above bellows and defining with it said cavity (B), a second tight bellows (12) extending substantially along the longitudinal direction of the rigid tubular bodies (1, 2) and sealingly attached like the first bellows onto the external tubular body.

2. Bushing according to claim 1, characterized in that the internal volume (E) of the second bellows (12) is vented to the open air through an aperture (13) bored within the external tubular body (2).

3. Bushing according to any one of the claims 1 and 2, characterized in that the first bellows (7) has the shape of a strap which transversely extends and is bulged toward the bushing axis, and in that the second bellows (12) is so shaped and directed as well.

4. Bushing according to any one of the preceding claims, characterized in that the transverse cross-section of the strap constituting the second bellows (12) has the shape of a U or V having both respective legs properly corrugated.

5. Bushing according to any one of the preceding claims, characterized in that the transverse cross-section of the strap constituting the second bellows (12) has the shape of a U or V having a flat bottom (14).

6. Bushing according to claim 5, characterized in that the flat bottom (14) is hollowed out in the direction of the external tubular body (2).

7. Bushing according to claim 6, characterized in that the flat bottom (14) is provided with two grooves (15) extending in parallel relationship to the middle line of the strap.

8. Bushing according to claim 7, characterized in that the two grooves (15) are joined by two grooves (16) which extend in parallel relationship to the bushing axis as to form together with the previous ones a closed loop.
